# EUROPÄISCHE PATENTSCHRIFT

(11) **EP 2 603 968 B1**
(45) Veröffentlichungstag und Bekanntmachung des Hinweises auf die Patenterteilung: **26.04.2017**
(21) Anmeldenummer: 11766923.4
(22) Anmeldetag: 20.09.2011
(51) Int. Cl.: H02K 55/00, F16C 32/04, H02K 9/193, H02K 55/04

(54) **VORRICHTUNG UND VERFAHREN ZUM GEDÄMPFTEN, BERÜHRUNGSLOSEN LAGERN EINER KÜHLMITTELZUFÜHRUNG FÜR SUPRALEITENDE MASCHINEN**
DEVICE AND METHOD FOR THE DAMPED, NON-CONTACT SUPPORT OF A COOLANT FEED LINE FOR SUPERCONDUCTING MACHINES
DISPOSITIF ET PROCÉDÉ POUR MONTER DE MANIÈRE AMORTIE ET SANS CONTACT UNE ALIMENTATION EN MILIEU DE REFROIDISSEMENT POUR DES MACHINES SUPRACONDUCTRICES

(30) Priorität: 24.09.2010 DE 102010041328
(43) Veröffentlichungstag der Anmeldung: 19.06.2013
(73) Patentinhaber: Siemens Aktiengesellschaft, 80333 München (DE)
(72) Erfinder: FRANK, Michael, 91080 Uttenreuth (DE); GRUNDMANN, Jörn, 91091 Großenseebach (DE); VAN HASSELT, Peter, 91058 Erlangen (DE)
(86) Internationale Anmeldenummer: PCT/EP2011/066304
(87) Internationale Veröffentlichungsnummer: WO 2012/038416

(56) Entgegenhaltungen:
- WO-A1-98/32981
- DE-A1- 10 358 341

## Beschreibung

Die vorliegende Erfindung betrifft eine Vorrichtung und ein Verfahren zum Lagern einer Kühlmittelzuführung für supraleitende Maschinen. Insbesondere betrifft die vorliegende Erfindung eine Vorrichtung zum Lagern einer langen Kühlmittelzuführung für supraleitende Maschinen gemäß dem Oberbegriff des Anspruchs 1. Eine derartige Vorrichtung gemäß dem Oberbegriff ist aus der DE 103 58 341 A1 bekannt.

Supraleitende Maschinen, wie beispielsweise Synchron-Motoren oder Generatoren, mit einer supraleitenden Rotorwicklung sind seit der Entdeckung der Hochtemperatur-Supraleitung bei Materialien wie YBCO und BiSCO, die bei einer Arbeitstemperatur von 77K ihre supraleitende Wirkung entfalten, wirtschaftlich einsetzbar. Eine solche supraleitende Maschine ist beispielsweise aus der DE 103 58 341 A1 bekannt.

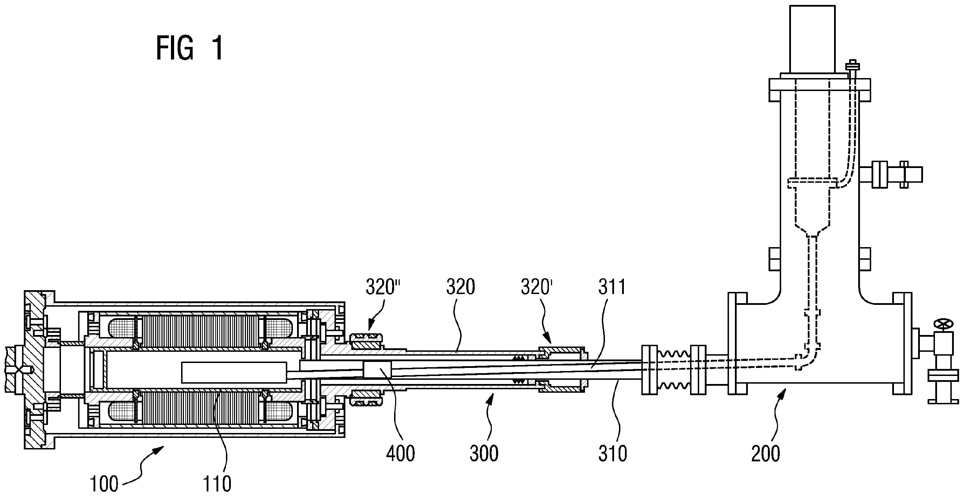

Figur 1 zeigt einen möglichen Aufbau einer solchen supraleitenden Maschine 100 mit angeschlossener Kälteeinheit 200. Damit die supraleitende Maschine 100 als solche arbeitet, muss die in der Maschine vorhandene supraleitende Wicklung zuvor auf seine Arbeitstemperatur von 77 K oder weniger heruntergekühlt werden. Dazu wird ein geeignetes Kühlmittel in einen Innenraum des als Welle ausgebildeten Rotors 110 der Maschine 100 eingebracht. Dieser Innenraum des Rotors ist dazu über entsprechende Mittel 300 mit der Kälteeinheit 200 verbunden. Die Kälteeinheit 200 kann nicht direkt mit der Maschine 100 verbunden werden. Vielmehr muss eine geeignete Abdichtung des Rotorinnenraumes gegen die Umgebung sichergestellt sein, so dass kein Wärmeleck und damit verbunden eine Beeinflussung der supraleitenden Wirkung entsteht. Zudem muss auch eine geeignete Abdichtung zwischen der, sich um ihre Achse, drehenden Rotorwelle 110 und der feststehenden Kälteeinrichtung 200 vorgesehen werden. Dies wird durch eine entsprechend ausgebildete Hohlwelle 320 erreicht. Zur Vermeidung eines Wärmelecks muss diese Hohlwelle 320 bei gegebenem Querschnitt aber entsprechend lang ausgebildet sein. Innerhalb der Hohlwelle 320 befindet sich die Kühlmittelzuführung 310, die fest mit der Kälteeinheit 200 verbunden ist und das Kühlmittel von der Kälteeinheit 200 in den Hohlraum des Rotors 110 führt. Die Hohlwelle 320 ist dabei auf der einen Seite 320 " fest mit der sich drehenden Rotorwelle 110 verbunden. Auf der anderen Seite 320' ist eine geeignete Dichtungseinrichtung zwischen der sich drehenden Hohlwelle 320 und der feststehenden Kühlmittelzuführung 310 vorgesehen. Innerhalb der Kühlmittelzuführung 310 können beispielsweise so genannte Wärmerohre 311 vorgesehen sein, die den eigentlichen Transport des Kühlmittels übernehmen.

Innerhalb der Hohlwelle 320 ist die Kühlmittelzuführung 310 auf einer Seite 320' durch die Dichtungseinrichtung gelagert und damit räumlich fixiert. Auf der anderen, der Maschinenseite 320" ist die Kühlmittelzuführung 310 über ein magnetisches Lager 400 räumlich fixiert. Das magnetische Lager 400 basiert auf einer supraleitenden und/oder permanentmagnetischen Lagerung. Supraleitende Lager sind sehr kostenintensiv, da supraleitende Materialien teuer und aufwendig herzustellen sind. Ein weiterer Nachteil ist die notwendige Kühlung auf eine Temperatur unterhalb der Sprungtemperatur des supraleitenden Materials, um die Funktionsfähigkeit des supraleitenden Lagers sicher zu stellen. Dies macht das Lager störanfällig und schränkt seine räumliche Anordnung in der Maschine 100 ein. Permanentmagnetische Lager weisen ein hohes Gewicht auf und sind ebenfalls kostenintensiv. Das Gewicht der Permanentmagnete lastet auf dem Ende der Kühlmittelzuführung 310, welches auf der Maschinenseite 320" liegt, und wirkt somit der Stabilisierung des Endes entgegen. Um der Destabilisierung entgegenzuwirken, müssen die Kühlmittelzuführung 310 und die Hohlwelle 320 massiv aufgebaut sein. Dies erhöht die Kosten und führt zu einer Verschlechterung der Maschineneigenschaften.

Eine Maschine 100 ohne ein magnetisches Lager 400 auf der Maschinenseite 320", führt zu einer frei beweglichen Kühlmittelzuführung 310 auf der Maschinenseite 320" ohne räumliche Fixierung. Dadurch, dass die Kühlmittelzuführung 310 nur einseitig fixiert ist, am anderen Ende der Hohlwelle aber frei beweglich ist, kann die Kühlmittelzuführung 310 zu Schwingungen angeregt werden. Gerade bei den geforderten Längen der Hohlwelle 320 bei supraleitenden Maschinen kann die dadurch bewirkte Resonanzfrequenz der Kühlmittelzuführung 310 im Arbeitsbereich der Drehfrequenzen der Maschine 100 liegen. Entsprechend muss diese Frequenz als Betriebsfrequenz der Maschine 100 explizit ausgeschlossen werden. So kann zwar versucht werden, durch entsprechende konstruktive Maßnahmen an der Kühlmittelzuführung 310 die Resonanzfrequenz außerhalb des Drehfrequenzbereichs der Rotorwelle 110 und damit außerhalb des zulässigen Arbeitsbereichs der Maschine 100 zu halten. Dies wird aber durch die Forderung nach immer kleineren Bauvolumen von supraleitenden Maschinen und damit immer dünneren Hohlwellen und dünneren Kühlmittelzuführungen bei gleichzeitigem Wunsch nach höheren Drehzahlen zunehmend schwieriger.

Aufgabe der vorliegenden Erfindung ist deshalb, eine entsprechende Vorrichtung und ein Verfahren anzugeben, welche auch bei kleinen Bauvolumen und höheren Drehzahlen vermeiden, dass der zulässige Arbeitsbereich der supraleitenden Maschine durch die Resonanzfrequenz der Kühlmittelzuführung eingeschränkt wird, wobei auf Lager mit schweren Permanentmagneten an der Kühlmittelzuführung oder teuren Supraleitern verzichtet werden soll.

Diese Aufgabe wird gelöst durch die Vorrichtung zum Lagern einer Kühlmittelzuführung mit den Merkmalen des Anspruchs 1 sowie durch das Verfahren zur Verwendung der zuvor genannten Vorrichtung mit den Merkmalen des Anspruchs 8.

Vorteilhafte Ausgestaltungen der erfindungsgemäßen Vorrichtung und des erfindungsgemäßen Verfahrens zum Lagern einer Kühlmittelzuführung gehen aus den jeweils zugeordneten abhängigen Unteransprüchen hervor. Dabei können die Merkmale des Hauptanspruchs mit Merkmalen der Unteransprüche und Merkmale der Unteransprüche untereinander kombiniert werden.

Die erfindungsgemäße Vorrichtung zum Lagern einer Kühlmittelzuführung, insbesondere langer Kühlmittelzuführungen für supraleitende Maschinen, umfasst eine Hohlwelle, die in einem ersten Bereich mit der supraleitenden Maschine verbindbar ist und in deren Innerem die Kühlmittelzuführung zum Führen von Kühlmittel von einer Kälteeinheit zur supraleitenden Maschine angeordnet ist. Dabei ist die Kühlmittelzuführung in einem zweiten Bereich der Hohlwelle mit der Kälteeinheit verbindbar und in dieser Hohlwelle fixiert. Für die Kühlmittelzuführung im ersten Bereich der Hohlwelle ist ein magnetisches Lager vorgesehen und so angeordnet, dass eine radiale und damit dämpfende und/oder zentrierende Kraft auf die Kühlmittelzuführung ausgeübt wird. Das magnetische Lager weist einen ersten und einen zweiten Magnetzylinder auf, wobei der erste Magnetzylinder am Außenmantel der Kühlmittelzuführung und der zweite Magnetzylinder an der Innenseite der Hohlwelle so angeordnet sind, dass sich erster und zweiter Magnetzylinder in radialer Richtung gegenüberstehen. Der erste Magnetzylinder ist ein Zylinder aus gut elektrisch leitendem Material mit Ohmschen Widerstand.

Grundlage für die Erfindung war die Feststellung, dass eine Dämpfung der Bewegung bzw. Schwingung der Kühlmittelzuführung ausreichend ist, um eine langfristig funktionsfähige Maschine bereitzustellen. Auf eine Zentrierung mit großen Kräften und somit mit einer starken Fixierung der Kühlmittelzuführung über reine Permanentmagnetlager oder Magnetlager mit supraleitendem Material kann verzichtet werden. Bewegungsinduzierte Wirbelströme in gut elektrisch leitendem Material mit Ohmschen Widerstand, d.h. nicht supraleitendem Material, sind ausreichend um eine genügend große Dämpfung von Schwingungen eines freien Endes einer Kühlmittelzuführung zu gewährleisten. Eine zuverlässige Funktion ohne Zerstörung der Maschine durch Schwingungen eines Endes der Kühlmittelzuführung ist so dauerhaft sichergestellt.

Das gut elektrisch leitende Material kann aus Kupfer, Silber, Gold oder Aluminium bestehen. Aluminium weist z.B. nur ein geringes Gewicht auf und führt so zu günstigen Eigenschaften der Maschine. Da nur dünne Schichten des gut elektrisch leitenden Materials notwendig sind, können diese einfach und kostengünstig hergestellt werden.

Das gut elektrisch leitende Material kann aus hochreinem Kupfer, Silber, Gold oder Aluminium mit einem Reinheitsgrad größer 99,9 Vol-% bestehen. Diese Materialien sind handelsüblich zu erwerben und ermöglichen bei kryogenen Temperaturen hohe elektrische Leitfähigkeiten. So kann das gut elektrisch leitende Material bei kryogenen Temperaturen, insbesondere Temperaturen kleiner oder gleich 77°K, einen spezifischen elektrischen Widerstand kleiner 100 µΩcm²/m, insbesondere kleiner 10 µΩcm²/m aufweisen. Dadurch reichen sehr dünne Schichten im Bereich von Millimetern bis hin zu Mikrometern aus, um Wirbelströme für eine gute Dämpfung bei Bewegung der Kühlmittelzuführung zu erzeugen. Durch das geringe zusätzliche Gewicht des gut elektrisch leitenden Materials an der insbesondere dünnwandigen Kühlmittelzuführung kann eine schwerkraftsbedingte Verbiegung der Kühlmittelzuführung in tolerablen Grenzen gehalten werden.

Der zweite Magnetzylinder kann aus einer Anzahl axial nebeneinander angeordneter konzentrischer Permanentmagnetringe bestehen. Die Permanentmagnetringe am zweiten Magnetzylinder führen zu keiner mechanischen Belastung der Kühlmittelzuführung, womit die zuvor beschriebenen Vorteile erhalten bleiben. Durch die Permanentmagnete kann einfach und ohne elektrischen Aufwand, wie er im Falle der Magnetfelderzeugung über elektrische Spulen notwendig ist, in dem gut elektrisch leitenden Material Wirbelströme erzeugt werden, bei Bewegung der Permanentmagnete relativ zur Schicht aus gut elektrisch leitenden Material. Über die Wirbelströme wird eine Dämpfung der Bewegung erreicht, wie zuvor beschrieben mit den gewünschten Vorteilen.

Zwischen der Innenseite der Hohlwelle und den konzentrischen Permanentmagnetringen kann ein zweiter Zylinder aus ferromagnetischem Material angeordnet sein. Alternativ oder zusätzlich können in axialer Richtung nebeneinander liegende Permanentringe jeweils durch einen Ring aus ferromagnetischem Material voneinander getrennt sein. Das ferromagnetische Material bewirkt eine verstärkte Wirkung des magnetischen Feldes der Permanentmagnete auf die Schicht aus gut elektrisch leitendem Material an der Kühlmittelzuführung und somit eine verstärkte Bewegungsdämpfung.

Das erfindungsgemäße Verfahren zur Verwendung einer zuvor beschriebenen Vorrichtung umfasst, dass die Kühlmittelzuführung gegenüber mechanischen Bewegungen relativ zur Hohlwelle gedämpft wird. Die Dämpfung der mechanischen Bewegung kann durch bewegungsinduzierte Wirbelströme im elektrisch leitenden Material des ersten Magnetzylinders erfolgen. Das Verfahren und die Vorrichtung können in einer supraleitenden Maschine eingesetzt werden.

Die mit dem Verfahren zum Lagern einer Kühlmittelzuführung und der Verwendung des Verfahrens und der Vorrichtung zum Lagern einer Kühlmittelzuführung verbundenen Vorteile sind analog den Vorteilen, welche zuvor im Bezug auf die Vorrichtung selbst beschrieben wurden.

Dadurch, dass die Kühlmittelzuführung an einem Ende durch das magnetische Lager und am anderen Ende durch die bereits vorhandene Dichtungseinrichtung in der Hohlwelle gelagert ist, wird eine zweiseitige Fixierung der Kühlmittelzuführung in der Hohlwelle erreicht. Dadurch wird sich die Resonanzfrequenz der Kühlmittelzuführung zu wesentlich höheren Frequenzen und damit weg vom Arbeitsbereich der supraleitenden Maschine verschieben. Gerade bei langen Hohlwellen und damit langen Kühlmittelzuführungen, so wie sie für eine supraleitende Maschine gefordert wird, kann damit eine Einschränkung des zulässigen Arbeitsbereichs dieser Maschine vermieden werden. Da die magnetische Lagerung vorzugsweise an dem Ende der Hohlwelle der mit der Rotorwelle verbunden ist oder sogar in der Läuferbohrung selbst, in die ja auch die Kühlmittelzuführung hineinragt, vorgesehen ist, befindet sich das magnetische Lager sehr nahe am Rotor mit dem darin enthaltenen Kühlmittel und damit in einem Bereich mit sehr niedrigen Temperaturen. Bei solchen Temperaturen um 77°K oder weniger sind derzeit aber nur magnetische Lager einsetzbar. Zudem haben die magnetischen Lager den Vorteil, dass sie im Gegensatz zu konventionellen mechanischen Lagern geringere Verluste aufweisen. Die kryogenen Temperaturen, welche sich im räumlichen Bereich des Lagers auf Grund des Maschinenaufbaus ergeben, können gleichzeitig genutzt werden, um über eine gute Leitfähigkeit im hochreinen gut elektrisch leitenden Material eine gute Bewegungsdämpfung zu erzielen, womit wenig gut elektrisch leitendes Material verwendet werden muss. Wenig gut elektrisch leitendes Material ist gleichbedeutend mit wenig Gewichtskraft und somit wenig Gewichtsbelastung und eventuell Durchbiegung der Kühlmittelzuführung.

Durch die Ausbildung des magnetischen Lagers aus einem ersten, am Außenmantel der Kühlmittelzuführung angeordneten, und einem zweiten, an der Innenseite der Hohlwelle angeordneten, Magnetzylinders, die sich beide in radialer Richtung gegenüberstehen, ist auch weiterhin ein einfacher Einbau der Kühlmittelzuführung möglich. Durch den zwischen den beiden Magnetzylindern vorhandenen Spalt kommt es zu keinen mechanischen Einschränkungen beim Einbau. Vielmehr kann die Kühlmittelzuführung wie bisher auch ohne größere Probleme in die Hohlwelle eingeführt und damit die Kälteeinheit mit der supraleitenden Maschine verbunden werden.

Da sich das magnetische Lager im selben Hohlraum wie das Kühlmittel für die Rotorwelle der supraleitenden Maschinen befindet, kann der supraleitende Magnetzylinder auch durch das Kühlmittel auf eine Temperatur von 77°K oder weniger heruntergekühlt werden. Jedoch wird durch Verwendung von gut elektrisch leitendem Material mit Ohmschen Widerstand statt von supraleitendem Material die magnetische Lagerwirkung und damit die Dampfung der Bewegung der Kühlmittelzuführung durch das magnetische Lager nicht erst bei einer Arbeitstemperatur kleiner gleich 77°K erreicht. Dies erhöht die Zuverlässigkeit der Wirkung des magnetischen Lagers, auch im Falle eines Ausfalls der Kühleinrichtung.

Bevorzugte Ausführungsformen der Erfindung mit vorteilhaften Weiterbildungen gemäß den Merkmalen der abhängigen Ansprüche werden nachfolgend anhand der Figuren näher erläutert, ohne jedoch darauf beschränkt zu sein.

Es wird in den Figuren dargestellt:
- Fig.1: eine Anordnung aus supraleitender Maschine mit angeschlossener Kühlvorrichtung nach dem Stand der Technik, und
- Fig.2: eine erste Ausführungsform der magnetischen Lagerung der erfindungsgemäßen Vorrichtung mit einem Zylinder aus gut elektrisch leitendem Material mit Ohmschen Widerstand, und
- Fig. 3: eine zweite Ausführungsform der magnetischen Lagerung der erfindungsgemäßen Vorrichtung analog der in Fig. 2 gezeigten Vorrichtung, mit leichten konstruktiven Änderungen.

Figur 1 zeigt nochmals den eingangs mit Bezug auf den Stand der Technik bereits beschriebenen prinzipiellen Aufbau einer supraleitenden Maschine 100 mit Kälteeinheit 200. Die Maschine, im vorliegenden Beispiel ein Synchron-Motor 100, ist über die Mittel 300, das sind insbesondere die Hohlwelle 320 und die Kühlmittelzuführung 310, mit der Kälteeinheit 200 verbunden. In der Kälteeinheit wird das Kühlmittel auf 77 K heruntergekühlt und der Rotorwelle 110 des Synchron-Motors 100 über die Kühlmittelzuführung 310 zugeführt. Zur Vermeidung eines Wärmelecks am Synchron-Motor 100 ist die Hohlwelle 320 entsprechend lang ausgebildet. Die Hohlwelle ist auf der einen Seite, das heißt im Bereich 320", mit der Rotorwelle 110 fest verbunden, so dass diese sich im Betrieb der Synchron-Maschine mit der gleichen Drehzahl wie der Rotor 110 dreht. In der Hohlwelle 320 ist die Kühlmittelzuführung 310 angeordnet. An dem, dem Synchron-Motor 100 abgewandten Ende, das heißt dem Bereich 320', der Hohlwelle 320 ist eine Dichtungseinrichtung, die beispielsweise als Ferrofluiddichtung, Labyrinthdichtung oder Spaltdichtung ausgebildet ist, vorgesehen. Diese Dichtungseinrichtung dichtet das innere Raumvolumen des Rotors 110 und der damit verbundenen Hohlwelle 320 gegenüber der Umgebung ab. Zudem ist durch diese Dichtungseinrichtung die Kühlmittelzuführung 310 geführt und somit gelagert und fixiert. Außerhalb der Hohlwelle 320 ist die Kühlmittelzuführung 310 dann in geeigneter Weise, beispielsweise durch eine Flanschverbindung mit der Kälteeinheit 200 verbunden. Über ein oder mehrere so genannte Wärmerohre 311 in der Kühlmittelzuführung 310 kann nun das Kühlmittel von der Kälteeinheit 200 in das Innere der Rotorwelle 110, und umgekehrt, gelangen. Auf eine weiter detailliertere Schilderung zur Ausführung und Wirkungsweise der supraleitenden Maschine, der Kälteeinheit und der Hohlwelle wird hier verzichtet. Vielmehr soll hierzu auf die DE 102 31 434 A1 verwiesen werden.

Wie in Figur 1 gezeigt ist nun nach dem Stand der Technik an dem, der Maschine zugewandten, Ende 320" der Hohlwelle 320 ein magnetisches Lager 400 vorgesehen und so angeordnet, dass eine radial abstoßende und damit zentrierende Kraft auf die Kühlmittelzuführung 310 ausgeübt wird. Das magnetische Lager 400 nach dem Stand der Technik basiert rein auf Permanentmagneten oder auf Permanentmagneten in Wechselwirkung mit supraleitendem Material. Durch diese magnetische Lagerung 400 und die Lagerung in der Dichtungseinrichtung wird nun die vormals nur einseitig gelagerte Kühlmittelzuführung 310 nun beidseitig in der Hohlwelle 320 gelagert und fixiert. Durch die zusätzliche Fixierung wird erreicht, dass das auf der Maschinenseite vormals frei schwebende und damit schwingungsfähige Ende der Kühlmittelzuführung 310 nun fixiert und damit die Resonanzfrequenz der Kühlmittelzuführung 310 in höhere Frequenzbereiche verschoben wird. Dabei ist die genaue Lage der magnetischen Lagerung 400 in der Hohlwelle 320 aber nur insofern im Stand der Technik von Bedeutung, als dass das magnetische Lager so angeordnet sein muss, dass durch die beidseitige Fixierung der Kühlmittelzuführung 310 eine Verschiebung deren Resonanzfrequenz weg vom Arbeitbereich der supraleitenden Maschine 100 erreicht wird und eine kryogene Temperatur bei Verwendung von supraleitendem Material vorliegt. Vorzugsweise ist das magnetische Lager 400 dabei am Ende der Hohlwelle, beispielsweise einem Flansch zwischen Hohlwelle und Rotorwelle oder auch in der Rotorwelle selbst vorgesehen.

Das magnetische Lager 400 besteht aus einem ersten 410 und einem zweiten 420 Magnetzylinder, wobei der erste Magnetzylinder 410 am Außenmantel der Kühlmittelzuführung 310 und der zweite Magnetzylinder 420 an der Innenseite der Hohlwelle 320 angeordnet ist. Beide Magnetzylinder 410 und 420 sind dabei so angeordnet, dass sie sich in radialer Richtung gegenüberstehen. Dabei sind die Abmessungen der beiden Magnetzylinder 410 und 420 so gewählt, dass zwischen der Außenfläche des ersten Magnetzylinders 410 und der Innenfläche des zweiten Magnetzylinders 420 noch ein Spalt vorhanden ist. Die beiden Magnetzylinder 410,420 sind mit ihren Magnetfeldern so ausgerichtet, dass sie im Spalt gegeneinander abstoßende Kräfte bewirken. Durch diese sich abstoßende Kräfte wird die Kühlmittelzuführung 310 zusammen mit dem ersten Magnetzylinder 410 im freien Innenraum des zweiten Magnetzylinders in einen schwebenden Zustand versetzt und durch die bewirkten abstoßenden Kräfte in diesem Innenraum zentriert. Dadurch ist die Kühlmittelzuführung 310 nun beidseitig in der Hohlwelle 320 fixiert, wodurch sich die Resonanzfrequenz der Kühlmittelzuführung 310 zu höheren Frequenzen und damit weg vom Drehfrequenzbereich des Motors 100 verschiebt.

Wie zuvor schon beschrieben muss bei Verwendung von supraleitendem Material im magnetischen Lager 400 das Lager 400 in einem räumlichen Bereich angeordnet sein, welcher auf kryogene Temperaturen gekühlt ist, wobei das Lager 400 bei Ausfall oder Abschaltung der Kühlung nicht in Funktion ist. Dies kann insbesondere bei Störungen an der Kälteeinheit 200 zu irreversiblen Deformationen bis hin zur Zerstörung der Maschine 100 und/oder der Kühlmittelzuführung 310 führen. Bei Verwendung von magnetischen Lagern 400 rein aus Permanentmagneten kann das relativ große Gewicht der Permanentmagnete zu einer Deformation der Kühlmittelzuführung 310 führen. Um dies zu vermeiden ist ein verstärkter Materialeinsatz notwendig, welcher kostenintensiv ist und zu einer Verschlechterung der Eigenschaften der Maschine 100 im Betrieb führen kann.

Um die Probleme beim Stand der Technik zu vermeiden hat die Erkenntnis, dass eine Dämpfung von Bewegungen bzw. mechanischen Schwingungen der Kühlmittelzuführung 310 ausreichend ist, um Beschädigungen der Maschine 100 und/oder der Kühlmittelzuführung 310 zu vermeiden, zur erfinderischen Idee geführt, keine Permanentmagnete und keine supraleitenden Materialien zur Lagerung auf der Seite der Kühlmittelzuführung 310 zu verwenden. Eine Gewichtsreduktion und zuverlässigere Bewegungsdämpfung auch bei höheren Temperaturen als kryogenen Temperaturen führt zu einer Verbesserung der Maschineneigenschaften im Betrieb und auch zu einer Verringerung der Störanfälligkeit der Maschine 100 in Verbindung mit der Kälteeinheit 200.

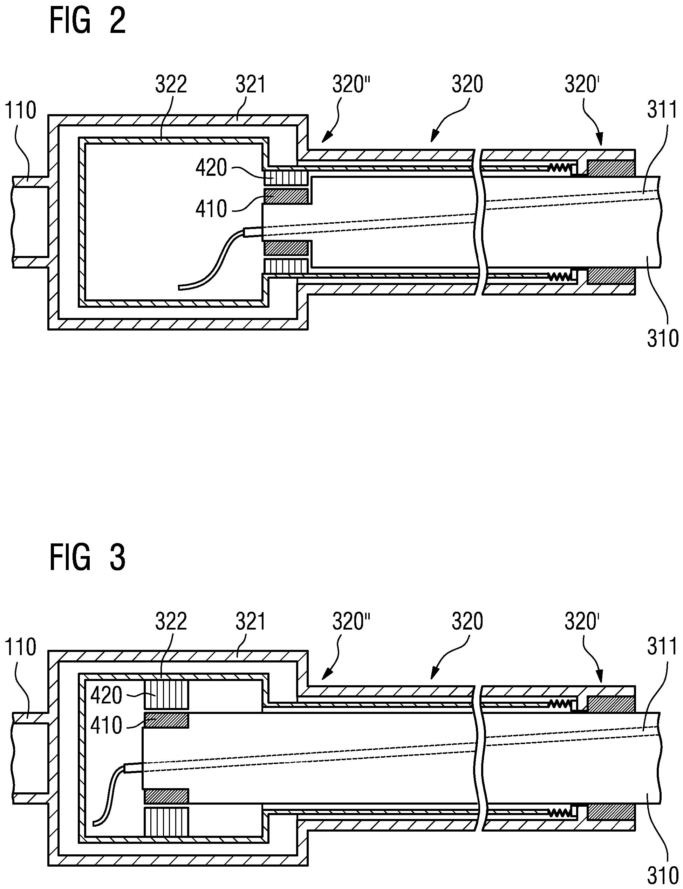

Figur 2 zeigt eine erste Ausführungsform der erfindungsgemäßen Vorrichtung zum Lagern einer Kühlmittelzuführung, bei welcher der erste Magnetzylinder 410 ein Zylinder aus gut elektrisch leitendem Material mit Ohmschen Widerstand ist. Die Hohlwelle 320 besteht hier aus einem äußeren Mantel 321, zum Beispiel einer NDE Hohlwelle und einem inneren Mantel 322. Zwischen dem äußerem und dem innerem Mantel befindet sich dabei ein Isoliervakuum. Im inneren Mantel 322 befindet sich die, durch die Dichtungseinrichtung am Ende 320' der Hohlwelle 320 von außen eingeführte Kühlmittelzuführung 310. Über ein Wärmerohr 311 in der Kühlmittelzuführung wird das Kühlmittel in den Bereich 320" der Hohlwelle und damit auch in die daran anschließende Rotorwelle 110 eingebracht. Eine Dichtungseinrichtung aus Ferrofluid lagert die Kühlmittelzuführung 310 im Bereich 320' der Hohlwelle 320. Auf der dazu abgewandten Seite 320" der Hohlwelle 320 ist erfindungsgemäß das magnetische Lager 400 mit einem Zylinder auf dem äußeren Umfang der Kühlmittelzuführung 310 vorgesehen, welcher aus gut elektrisch leitendem Material mit Ohmschen Widerstand besteht. In axialer Richtung sind an der gleichen Stelle auf der Innenseite der Hohlwelle 320 eine Anzahl von Permanentmagnetringen axial nebeneinander angeordnet. Diese Anzahl von magnetischen Ringen bildet dann den zweiten Magnetzylinder 420, welcher in seinem freien Innenraum eine Bewegung des ersten Zylinders 410 aus gut elektrisch leitendem Material mit Ohmschen Widerstand ermöglicht. Die Bewegung des ersten 410 im zweiten 420 Zylinder ist Berührungslos in gewissen Grenzen möglich, wodurch keine direkte, strahlungsfreie Wärmeleitung zwischen Kühlmittelzuführung 310 und Hohlwelle 320 bzw. Rotorwelle 110 erfolgt.

Bei Bewegung bzw. mechanischer Schwingung der Kühlmittelzuführung 310 relativ zur Hohlwelle 320 auf der Seite 320" wird durch das räumlich sich verändernde Magnetfeld der z.B. Permanentmagnete des ersten Magnetzylinders 410 am Ort des zweiten Magnetzylinders 420 aus gut elektrisch leitendem Material mit Ohmschen Widerstand im gut elektrisch leitendem Material mit Ohmschen Widerstand Wirbelströme erzeugt, deren Magnetfeld in Wechselwirkung mit dem Magnetfeld des ersten Magnetzylinders 410 zu einer Dämpfung der Bewegung bzw. mechanischer Schwingung führen. Eine Fixierung bzw. Lagerung mit größeren magnetischen Feldern durch Permanentmagnete auf beiden Seiten, sowohl im ersten als auch im zweiten Magnetzylinder oder durch Verwendung von supraleitendem Material im Lager 400 ist nicht notwendig um eine ausreichende Dämpfung der Bewegung bzw. mechanischer Schwingung zu erreichen. Die Wirbelströme und deren Magnetfelder im gut elektrisch leitenden Material mit Ohmschen Widerstand sind ausreichend, um eine ausreichende Dämpfung der Bewegung bzw. mechanischer Schwingung der Kühlmittelzuführung 310 zu erreichen, welche deren irreversible mechanische Beschädigung verhindert.

Ist die Betriebstemperatur von 77°K oder weniger für die supraleitende Maschine 100 erreicht, wird auch der Zylinder 410 sehr gut leitend, da der Ohmsche Widerstand insbesondere für sehr reine Metalle stark mit der Temperatur auf geringe Werte bei tiefen Temperaturen abnimmt. Somit wird bei Betriebstemperatur aus der zuvor einseitig fixierten, das heißt eingespannten, Kühlmittelzuführung 310 eine zweiseitig gelagerte Anordnung, deren Bewegungen auf der Seite 320" stark gedämpft sind. Im Betrieb rotiert die Hohlwelle 320 und damit auch der supraleitende zweite Magnetzylinder 420 um die feststehende Kühlmittelzuführung 310 und den daran angeordneten ersten Magnetzylinder 410. Die durch die Magnetfelder der beiden Magnetzylinder 410 und 420 resultierenden in radiale Richtung wirkenden Kräfte führen dann dazu, dass die Kühlmittelzuführung 310 auch an diesem Ende 320" der Hohlwelle 320 gegenüber Bewegungen gedämpft ist.

In dem in Figur 3 gezeigten Ausführungsbeispiel ist das magnetische Lager 400, das identisch zu der in Figur 2 gezeigten magnetischen Lagerung aus einem ersten Magnetzylinder 410 aus gut elektrisch leitendem Material mit Ohmschen Widerstand und einem zweiten Magnetzylinder 420 mit einer Anzahl von Permanentmagnetringen 410 aufgebaut ist, an einer Stelle im Bereich 320" der Hohlwelle 320 angeordnet, der als so genannter Halsrohrflansch ausgebildet ist.

Beide in den Figuren 2 und 3 gezeigte Ausführungsbeispiele eines magnetischen Lagers 400 haben insbesondere den Vorteil, dass die Montage der Kälteeinheit 200 und der Kühlmittelzuführung 310 an die supraleitende Maschine 100 nicht wesentlich durch das zusätzliche magnetische Lager 400 beeinflusst wird. Da der Lagerspalt zwischen den beiden Zylindern 410 und 420 relativ groß gewählt werden kann, ist das Einführen der Kühlmittelzuführung 310 in die Hohlwelle 320 auch in der erfindungsgemäßen Vorrichtung unproblematisch. Zur Verbesserung der Lagerwirkung können aber auch kleine Lagerspalte gewählt werden.

Zwischen den einzelnen Permanentmagnetringen können ferromagnetische Scheiben zur Flussführung eingeführt sein. Die einzelnen Permanentmagnetringe sind vorzugsweise aus Nd-B-Fe oder Sm-Co. Zwischen diesen Scheiben und den Permanentmagnetringen können zusätzlich, in Figur 2 nicht dargestellte, dünne Bleche aus ferromagnetischem Material eingefügt sein. Bei den in den Fig. 2 und 3 gezeigten Anordnungen sollte für eine optimale Wirkung des magnetischen Lagers 400 der Luftspalt eine Höhe aufweisen, die circa dem 0,1-0,3-fachen der Breite L der einzelnen Permanentmagnetringe in axialer Richtung entspricht. Die radiale Dicke der Magnetzylinder sollte circa dem Wert (L/2 bis 4xL) entsprechen. In einer typischen Anwendung für eine supraleitende Maschine, wie beispielsweise einen supraleitenden Motor oder Generator, wird der Durchmesser der Kühlmittelzuführung 310 einen Wert von 1-3 cm aufweisen. Dementsprechend werden die Permanentmagnetringe eine Breite von etwa 0,4 -1 cm und eine radiale Dicke von 0,2 - 2,5 cm aufweisen. Die ferromagnetischen Scheiben sollten eine Dicke von 1-4 mm und der Luftspalt zwischen dem feststehenden ersten Zylinder 410 und dem rotierendem zweitem Magnetzylinder 420 sollte eine Höhe von 0,7 - 2,5 mm aufweisen.

Auch wenn beim ersten Zylinder 410 von einem Magnetzylinder die rede ist, so bedeutet dies nicht, dass der Zylinder permanentmagnetisch ist, sondern dass durch erzeugte Wirbelströme bei Bewegung relativ zum zweiten Magnetzylinder 420 Magnetfelder erzeugt werden, welche der Bewegung entgegenwirken, d.h. diese dämpfen. So ist der Begriff Lagerung bzw. Lager 400 als Dämpfungseinrichtung zu verstehen, welche einer räumlichen Relativbewegung der Kühlmittelzuführung 310 zur Maschine 100 und Rotationen entgegenwirkt, diese aber nicht vollständig unterbindet. Viel mehr werden auftretende mechanische Schwingungen der Kühlmittelzuführung 310 auf der Seite 320" der Hohlwelle zur Rotorwelle hin gedämpft und können nicht in einem Resonanzfall zu einer irreversiblen Zerstörung führen.

Der zweite Magnetzylinder 420 kann alternativ zum Aufbau aus Permanentmagneten auch stromdurchflossene Spulen bzw. Leiterschleifen umfassen, oder andere ein Magnetfeld erzeugende Einrichtungen. Die in den Fig. 2 und 3 dargestellten Ausführungsbeispiele der Vorrichtung zum Lagern einer Kühlmittelzuführung sollen die Erfindung nicht beschränken, sondern können auch untereinander und/oder mit anderen, nicht dargestellten Ausführungsformen kombiniert werden.

## Patentansprüche

1. Vorrichtung (300) zum Lagern einer langern Kühlmittelzuführung (310) für supraleitende Maschinen (100), mit einer Hohlwelle (320), die in einem ersten Bereich (320") mit der supraleitenden Maschine (100) verbindbar ist und in deren Innerem die Kühlmittelzuführung (310) zum Führen von Kühlmittel von einer Kälteeinheit(200) zur supraleitenden Maschine (100) angeordnet ist, wobei die Kühlmittelzuführung (310) in einem zweiten Bereich der Hohlwelle (320) mit der Kälteeinheit (200) verbindbar ist, und in dieser Hohlwelle (320) fixiert ist, wobei
• für die Kühlmittelzuführung (310) im ersten Bereich (320") der Hohlwelle (320) ein magnetisches Lager (400) vorgesehen und so angeordnet ist, dass eine radiale und damit dämpfende und/oder zentrierende Kraft auf die Kühlmittelzuführung (310) ausgeübt wird, und wobei
• das magnetische Lager (400) einen ersten (410) und einen zweiten (420) Magnetzylinder aufweist, wobei der erste Magnetzylinder (410) am Außenmantel der Kühlmittelzuführung (310) und der zweite Magnetzylinder (420) an der Innenseite der Hohlwelle (320) so angeordnet ist, dass sich erster (410) und zweiter (420) Magnetzylinder in radialer Richtung gegenüberstehen,
**dadurch gekennzeichnet, dass** der erste Magnetzylinder (410) ein Zylinder aus gut elektrisch leitendem Material mit Ohmschen Widerstand ist.

2. Vorrichtung nach Anspruch 1, **dadurch gekennzeichnet, dass** das gut elektrisch leitende Material aus Kupfer, Silber, Gold oder Aluminium besteht.

3. Vorrichtung nach Anspruch 2, **dadurch gekennzeichnet, dass** das gut elektrisch leitende Material aus hochreinem Kupfer, Silber, Gold oder Aluminium mit einem Reinheitsgrad größer 99,9 Volumenprozent besteht.

4. Vorrichtung nach einem der Ansprüche 1 bis 3, **dadurch gekennzeichnet, dass** das gut elektrisch leitende Material bei kryogenen Temperaturen, insbesondere Temperaturen kleiner oder gleich 77°K, einen spezifischen elektrischen Widerstand kleiner 100 µΩcm²/m, insbesondere kleiner 10 µΩcm²/m aufweist.

5. Vorrichtung nach einem der Ansprüche 1 bis 4, **dadurch gekennzeichnet, dass** der zweite Magnetzylinder (420) aus einer Anzahl axial nebeneinander angeordneter konzentrischer Permanentmagnetringe (421,422,423,424) besteht.

6. Vorrichtung nach Anspruch 5, **dadurch gekennzeichnet, dass** zwischen der Innenseite der Hohlwelle (320) und den konzentrischen Permanentmagnetringen (421,422,423,424) ein zweiter Zylinder aus ferromagnetischem Material angeordnet ist.

7. Vorrichtung nach Anspruch 6, **dadurch gekennzeichnet, dass** in axialer Richtung nebeneinander liegende Permanentringe (421,422,423,424) jeweils durch einen Ring (451,452) aus ferromagnetischem Material voneinander getrennt sind.

8. Verfahren zur Verwendung einer Vorrichtung nach einem der Ansprüche 1 bis 7, **dadurch gekennzeichnet, dass** die Kühlmittelzuführung (310) gegenüber mechanischen Bewegungen relativ zur Hohlwelle (320) gedämpft wird.

9. Verfahren nach Anspruch 8, **dadurch gekennzeichnet, dass** die Dämpfung der mechanischen Bewegung durch bewegungsinduzierte Wirbelströme im elektrisch leitenden Material des ersten Magnetzylinders (410) erfolgt.

10. Supraleitende Maschine mit einer Vorrichtung nach einem der Ansprüche 1 bis 7.

## Claims

1. Device (300) for supporting a longer coolant feed line (310) for superconducting machines (100), with a hollow shaft (320), which is able to be connected in a first area (320") to the superconducting machine (100) and inside which the coolant feed line (310) for feeding coolant from the cooling unit (200) to the superconducting machine (100) is disposed, wherein the coolant feed line (310) is able to be connected in a second area of the hollow shaft (320) to the cooling unit (200) and is fixed in this hollow shaft (320), wherein
• a magnetic support (400) is provided for the coolant feed line (310) in the first area (320") of the hollow shaft (320) and is disposed so that a radial, and thereby damping and/or centring force is exerted on the coolant feed line (310), and wherein
• the magnetic support (400) has a first (410) and a second (420) magnetic cylinder, wherein the first magnetic cylinder (410) is disposed on the outer jacket of the coolant feed line (310) and the second magnetic cylinder (420) is disposed on the inner side of the hollow shaft (320) so that first (410) and second (420) magnetic cylinders lie opposite one another in the radial direction,
**characterised in that** the first magnetic cylinder (410) is a cylinder made of material with good electrical conductivity with ohmic resistance.

2. Device according to claim 1, **characterised in that** material with good electrical conductivity consists of copper, silver, gold or aluminium.

3. Device according to claim 2, **characterised in that** the material with good electrical conductivity consists of highly-pure copper, silver, gold or aluminium with a degree of purity greater than 99.9 percent by volume.

4. Device according to one of claims 1 to 3, **characterised in that**, at cryogenic temperatures, especially temperatures less than or equal to 77°K, the material with good electrical conductivity has a specific electrical resistance of less than 100 µQcm²/m, especially less than 10 µQcm²/m.

5. Device according to one of claims 1 to 4, **characterised in that** the second magnetic cylinder (420) consists of the number of concentric permanent magnet rings (421, 422, 423, 424) disposed axially next to one another.

6. Device according to claim 5, **characterised in that** a second cylinder made of ferromagnetic material is disposed between the inner side of the hollow shaft (320) and the concentric permanent magnet rings (421, 422, 423, 424).

7. Device according to claim 6, **characterised in that** permanent rings (421, 422, 423, 424) lying next to one another in the axial direction are each separated from one another by a ring (451, 452) made of ferromagnetic material.

8. Method for using a device according to one of claims 1 to 7, **characterised in that** the coolant feed line (310) is damped against mechanical movements relative to the hollow shaft (320).

9. Method according to claim 8, **characterised in that** the mechanical movements are damped by movement-induced eddy currents in the electrically-conductive material of the first magnetic cylinder (410).

10. Superconducting machine with a device according to one of claims 1 to 7.

## Revendications

1. Dispositif (300) de montage d'une admission (210) assez longue de fluide de refroidissement pour des machines (100) supraconductrices, comprenant un arbre (320) creux, qui peut, dans une première partie (320"), être relié à la machine (100) supraconductrice et à l'intérieur duquel l'admission (310) de fluide de refroidissement est disposée pour conduire du fluide de refroidissement d'un groupe (200) frigorifique à la machine (100) supraconductrice, dans lequel l'admission (310) de fluide de refroidissement peut, dans une deuxième partie de l'arbre (320) creux, être reliée au groupe (200) frigorifique et être immobilisée dans cette arbre (200) creux, dans lequel
• pour l'admission (310) de fluide de refroidissement, il est prévu et monté, dans la première partie (320") de l'arbre (320) creux, un palier (400) magnétique, qui applique une force radiale et ainsi d'amortissement et/ou de centrage à l'admission (310) de fluide de refroidissement et dans lequel
• le palier (400) magnétique a un premier (410) et un deuxième (420) cylindres magnétiques, le premier cylindre (410) magnétique étant disposé sur la surface latérale extérieure de l'admission (310) de fluide de refroidissement et le deuxième cylindre (420) magnétique sur la face intérieure de l'arbre (320) creux, de manière à ce que le premier (410) et le deuxième (420) cylindres magnétiques soient en opposition dans la direction radiale,
**caractérisé en ce que** le premier cylindre (410) magnétique est un cylindre en une matière conduisant bien l'électricité et ayant une résistance ohmique.

2. Dispositif suivant la revendication 1, **caractérisé en ce que** la matière conduisant bien l'électricité est en cuivre, en argent, en or ou en aluminium.

3. Dispositif suivant la revendication 2, **caractérisé en ce que** la matière conduisant bien l'électricité est en cuivre, en argent, en or ou en aluminium très pur ayant un degré de pureté plus grand que 99,9 pourcent en volume.

4. Dispositif suivant l'une des revendications 1 à 3, **caractérisé en ce que** la matière conduisant bien l'électricité a, à des températures cryogéniques, notamment à des températures inférieures ou égales à 77°K, une résistivité plus petite que 100 µΩcm²/m, notamment plus petite que 10 µΩcm²/m.

5. Dispositif suivant l'une des revendications 1 à 4, **caractérisé en ce que** le deuxième cylindre (420) magnétique est constitué d'un certain nombre d'anneaux (421, 422, 423, 424) d'aimant permanent concentriques disposés les uns à côté des autres axialement.

6. Dispositif suivant la revendication 5, **caractérisé en ce qu'**un deuxième cylindre en matériau ferromagnétique est disposé entre la face intérieure de l'arbre (320) creux et les anneaux (421, 422, 423, 424) d'aimant permanent concentriques.

7. Dispositif suivant la revendication 6, **caractérisé en ce que** des anneaux (421, 422, 423, 424) d'aimant permanent se trouvant les uns à côté des autres dans la direction axiale sont séparés les uns des autres par un anneau (451, 452) en matériau ferromagnétique.

8. Procédé d'utilisation d'un dispositif suivant l'une des revendications 1 à 7, **caractérisé en ce que** l'on amortit l'admission (310) de fluide de refroidissement vis-à-vis de déplacements mécaniques par rapport à l'arbre (320) creux.

9. Procédé suivant la revendication 8, **caractérisé en ce que** l'amortissement du mouvement mécanique s'effectue par des courants de Foucault induits par le mouvement dans le matériau conducteur de l'électricité du premier cylindre (410) magnétique.

10. Machine supraconductrice ayant un dispositif suivant l'une des revendications 1 à 7.
